# EUROPÄISCHE PATENTSCHRIFT

(11) **EP 0 892 668 B1**
(45) Veröffentlichungstag und Bekanntmachung des Hinweises auf die Patenterteilung: **19.09.2001**
(21) Anmeldenummer: 97915274.1
(22) Anmeldetag: 03.02.1997
(51) Int. Cl.: B01D 53/86, B01D 53/94, B01J 35/04

(54) **ANORDNUNG ZUM ABBAU VON STICKOXIDEN IN EINEM GASSTROM SOWIE DEREN VERWENDUNG**
ARRANGEMENT FOR DECOMPOSITION OF NITROGEN OXIDES IN A GAS STREAM AND THE USE THEREOF
DISPOSITIF POUR LA DECOMPOSITION DES OXYDES D'AZOTE DANS UN FLUX GAZEUX ET SON UTILISATION

(30) Priorität: 12.02.1996 DE 19605115
(43) Veröffentlichungstag der Anmeldung: 27.01.1999
(73) Patentinhaber: SIEMENS AKTIENGESELLSCHAFT, 80333 München (DE)
(72) Erfinder: MATHES, Wieland, D-96247 Michelau (DE); HOFMANN, Lothar, D-96224 Burgkunstadt (DE); WITZEL, Frank, D-96215 Lichtenfels (DE)
(86) Internationale Anmeldenummer: DE9700210
(87) Internationale Veröffentlichungsnummer: WO9729835

(56) Entgegenhaltungen:
- EP-A- 0 611 594
- WO-A-92/02716
- US-A- 3 785 781
- US-A- 5 108 716
- PATENT ABSTRACTS OF JAPAN vol. 012, no. 222 (M-712), 24.Juni 1988 & JP 63 018123 A (FUJI HEAVY IND LTD), 26.Januar 1988,

## Beschreibung

Die Erfindung betrifft eine Anordnung zum Abbau von Stickoxiden in einem Gasstrom, umfassend mehrere nacheinander von dem Gasstrom durchströmbare Katalysatoren, deren jeder eine Wabenstruktur mit vielen von dem Gasstrom durchströmbaren und zueinander parallelen Zellen aufweist, welche mit einer jeweiligen Zelldichte vorhanden sind, und deren jeder eine mittlere Aktivität, definiert als Gewichtsanteil des katalytisch aktiven Mediums in dem Katalysator, hat. Eine solche Anordnung geht hervor aus der EP 0 611 594 A1, der DE 40 27 329 A1, dem US-Patent 4,118,199 oder der DE 90 12 384 U1.

Eine solche Anordnung enthält insbesondere Katalysatoren, die Stickoxide nach dem Verfahren der Selektiven Katalytischen Reduktion (SCR) abbauen, wozu der Gasstrom mit einem geeigneten Reduktionsmittel versetzt werden muß. Als solches Reduktionsmittel kommt insbesondere Ammoniak in Betracht. Um den Gasstrom mit Ammoniak zu versetzen, kann entweder Ammoniak selbst oder eine leicht zersetzbare und Ammoniak freisetzende Verbindung, insbesondere Harnstoff, in dem Gasstrom verteilt werden.

Eine solche Anordnung ist insbesondere Bestandteil des Abgassystems eines Verbrennungstriebwerks, beispielsweise eines Dieselmotors oder einer Gasturbine, und der Gasstrom ist ein von dem Verbrennungstriebwerk abgegebenes Abgas. Grundsätzlich kommt die Anordnung zur Anwendung an jedem Verbrennungstriebwerk, welches ein Abgas abgibt, das noch Sauerstoff enthält; es kann sich also auch um einen Benzin- oder Gasmotor handeln, welcher mit Luftüberschuß betrieben wird.

Aus den in der Einleitung zitierten Schriften des Standes der Technik geht hervor, daß die von dem Gasstrom nacheinander durchströmten Katalysatoren mit unterschiedlichen chemischen Eigenschaften ausgestattet sind, siehe insbesondere EP 0 611 594 A1, US-Patent 4,118,199 sowie DE 40 27 329 A1. Insbesondere kann eine katalytisch aktive Substanz, die ein Bestandteil der Katalysatoren ist, entlang des Strömungsweges des Gasstroms mit ansteigender Konzentration vorgesehen sein.

Nach der DE 90 12 384 U1 sind in einer entsprechenden Anordnung Katalysatoren mit voneinander abweichenden Geometrien hintereinander angeordnet. Diese Katalysatoren können insbesondere Katalysatoren der Waben-Bauform sein. Dabei ist ein Katalysator der Waben-Bauform jeweils charakterisiert durch die Zelldichte, mit der die von dem Gasstrom durchströmbaren Zellen nebeneinander und zueinander parallel geschaltet angeordnet sind. In der Anordnung können Katalysatoren der Waben-Bauform mit voneinander verschiedenen Zelldichten vorgesehen sein.

Aufgabe der Erfindung ist die Angabe einer Anordnung der in der Einleitung bezeichneten Art, die in besonderer Weise den einschlägigen Parametern des Gasstroms, für den sie bestimmt ist, anpaßbar ist und die sich auszeichnet durch eine besonders hohe Wirksamkeit bei besonders kleiner Bauform. Auch soll eine Verwendung dieser Anordnung angegeben werden.

Zur Lösung dieser Aufgabe ist erfindungsgemäß vorgesehen, daß die Zelldichte eines zweiten Katalysators, der nach einem ersten Katalysator von dem Gasstrom durchströmbar ist, kleiner ist als die Zelldichte des ersten Katalysators, und daß die mittlere Aktivität des zweiten Katalysators größer ist als die mittlere Aktivität des ersten Katalysators.

Hier sind also Katalysatoren hintereinander angeordnet, die sowohl im Hinblick auf ihre chemische Zusammensetzung als auch im Hinblick auf ihre Geometrie wesentlich verschieden voneinander sind. Insbesondere sind Katalysatoren in einer Vielzahl, beispielsweise zu vier Stück, vorhanden, und die erwähnten Eigenschaften ändern sich von Katalysator zu Katalysator bevorzugt in monotoner Weise. Dies erschließt zusätzliche Freiheitsgrade für die Auslegung der Anordnung und ermöglicht es, die Anordnung wesentlich besser als bisher den sich aus vorgegebenen Eigenschaften des Gasstroms ergebenden Anforderungen anzupassen.

Insbesondere ist es möglich, die Anordnung so auszubilden, daß sie in einem weiten Temperaturbereich, beispielsweise von 170 °C bis 500 °C, voll wirksam ist. Hierzu können die Katalysatoren in der Anordnung so ausgebildet sein, daß sie bei voneinander verschiedenen jeweiligen maximalen Temperaturen ihre jeweilige höchste Wirksamkeit entfalten. Auch ist es möglich, eine sich hinsichtlich der Wirksamkeit zwischen den Katalysatoren ergebende Wechselwirkung zu berücksichtigen; insbesondere kann die Geometrie eines zweiten Katalysators spezifischen Eigenschaften des Gasstroms, die sich dadurch ergeben, daß er einen ersten Katalysator bereits durchströmt hat, Rechnung tragen. Darüber hinaus kann die Selektivität der Anordnung im Hinblick auf die von der Anordnung zu katalysierenden Reaktionen gegenüber dem Stand der Technik deutlich verbessert werden, denn unter entsprechender Berücksichtigung der zwischen den Katalysatoren auftretenden Wechselwirkungen kann jeder Katalysator im Hinblick auf die speziell an ihm herrschenden Bedingungen auf besonders große Selektivität optimiert werden.

Die Umsetzung von Schadstoffen in dem Abgas, welches die Anordnung mit den Katalysatoren durchströmt, bleibt anfangs gering, da die Aktivität des ersten Katalysators relativ gering ist. Dies wird insbesondere dadurch bewirkt, daß dieser Katalysator einen vergleichsweise geringen Gehalt an dem katalytisch aktiven Medium, beispielsweise Divanadiumpentoxid, aufweist. Dies macht den Katalysator allerdings sehr gut geeignet zur Umsetzung von Schadstoffen in einem Abgas, welches eine vergleichsweise hohe Temperatur aufweist, was beim ersten Katalysator der Anordnung in der Regel der Fall sein wird. Der zweite Katalysator hat eine vergleichsweise hohe Aktivität und ist somit gut geeignet, die hinter dem ersten Katalysator verbliebenen Reste der Schadstoffe aus dem Abgas zu entfernen. Der vergleichsweise hohe Gehalt an katalytisch aktivem Medium im zweiten Katalysator macht diesen speziell dann, wenn das katalytisch aktive Medium Divanadiumpentoxid ist, besonders geeignet zur Entfernung von Schadstoffen aus Abgas vergleichsweise niedriger Temperatur, wie dies am zweiten Katalysator in der Regel gegeben ist. In der Regel ist ja damit zu rechnen, daß die Temperatur des Abgases abnimmt, während es die Anordnung durchströmt. Die Verteilung der Aktivität über die Katalysatoren wird somit den spezifischen Eigenschaften des katalytisch aktiven Mediums in besonderer Weise gerecht.

Die Wahl einer vergleichsweise hohen Zelldichte für den ersten Katalysator sowie einer vergleichsweise geringen Zelldichte für den zweiten Katalysator trägt der Verteilung der Aktivität über die Anordnung in besonders vorteilhafter Weise Rechnung. Die Wahl einer relativ hohen Zelldichte für den ersten Katalysator gleicht nämlich die geringe Aktivität dieses Katalysators dadurch aus, daß sie im ersten Katalysator eine besonders große Oberfläche, an welcher die zu katalysierende Reaktion stattfinden kann, bereitstellt. Auf diese Weise kann selbst mit einer vergleichsweise geringen Aktivität eine gute Umsetzung der in dem Abgas enthaltenen Schadstoffe erreicht werden. Die Wahl einer hohen Aktivität für den zweiten Katalysator hingegen erlaubt die Wahl einer vergleichsweise geringen Zelldichte und damit einer vergleichsweise geringen Oberfläche in dem zweiten Katalysator für die zu katalysierende Reaktion, und gestattet somit eine Verminderung des durch die Einfügung der Anordnung in dem Abgasstrom verursachten Druckverlustes. Die hier vorliegende Anordnung wird somit den strömungstechnischen und chemischen Gegebenheiten, die bei der Entfernung von Schadstoffen aus einem Abgasstrom zu beachten sind, in besonders vorteilhafter Weise gerecht.

Im Rahmen einer bevorzugten Weiterbildung der Anordnung hat ein vorderster Katalysator, der von dem Gasstrom zuerst durchströmbar ist, eine Zelldichte von 200 cpsi bis 400 cpsi. Ein hinterster Katalysator, der von dem Gasstrom zuletzt durchströmbar ist, hat dabei eine Zelldichte von 10 cpsi bis 100 cpsi. Die Einheit "cpsi" hat sich auf dem Fachgebiet als geläufig verwendete Einheit eingebürgert. Sie bedeutet "cells per square inch" und gibt die Anzahl der Zellen des Katalysators pro Quadratzoll Querschnitt an. Die Zelldichte des vordersten Katalysators kann unabhängig von der Zelldichte des hinteren Katalysators variiert und den Anforderungen des konkreten Anwendungsfalls angepaßt werden. Es ist ebensogut möglich, die Zelldichte des vordersten Katalysators bei 400 cpsi und die Zelldichte des hintersten Katalysators bei 10 cpsi zu wählen, oder den vordersten Katalysator mit 200 cpsi und den hinteren Katalysator mit 100 cpsi vorzusehen. Um die Angabe der Zelldichte in eine Relation zu den im konkreten Anwendungsfall angebrachten Abmessungen eines Katalysators zu setzen, sei bemerkt, daß ein üblicher Katalysator, gemessen in einem Querschnitt, einen Durchmesser oder eine Dicke von zumindest 2 Zoll oder 5 cm hat. Somit hat ein üblicher Katalysator mit einer Zelldichte von 10 cpsi durchaus noch 100 oder mehr Zellen.

Weiterhin bevorzugt ist es, daß jeder Katalysator in der Anordnung aus einem keramischen Material besteht, desssen Grundlage Titandioxid und/oder Wolframtrioxid ist. Als katalytisch aktives Medium kommt in diesem Zusammenhang vor allen Dingen Divanadiumpentoxid in Betracht. Die mittlere Aktivität, gemessen am Gehalt an Divanadiumpentoxid, beträgt für den vordersten Katalysator insbesondere zwischen 0% und 5% sowie für den hintersten Katalysator zwischen 15% und 20%.

Weiterhin bevorzugt ist das katalytisch aktive Medium in jedem Katalysator inhomogen verteilt, wobei eine Konzentration des katalytisch aktiven Mediums in dem Katalysator in der von dem Gasstrom vorgegebenen Strömungsrichtung von der Anströmseite zur Abströmseite ansteigt. Im Hinblick auf die im vorigen Absatz erläuterte Ausführung, bei der das katalytisch aktive Medium Divanadiumpentoxid ist, kann dessen Konzentration vom vordersten bis zum hintersten Katalysator monoton von 0% bis 20% steigen. Möglichkeiten, um eine solche inhomogene Konzentration zu erzeugen, sind im Stand der Technik bekannt und bedürfen hier keiner weiteren Erläuterung.

Der Anordnung jedweder Ausgestaltung ist vorzugsweise eine Eindüsungsanlage zur Eindüsung eines Reduktionsmittels, vorzugsweise Harnstoff, in den Gasstrom vor den Katalysatoren zugeordnet. Wie bereits erläutert, kann die Anordnung besonders gut an einen Gasstrom, der betrieblich stark schwankende Parameter hat, angepaßt sein. Auch hierbei ist eine besonders kompakte Ausführung der Anordnung möglich. Die Anordnung eignet sich somit besonders zur Verwendung an einer mobilen Anlage, beispielsweise an einem Kraftfahrzeugmotor. Insbesondere für eine solche Anwendung ist die Verwendung von Harnstoff als Reduktionsmittel bevorzugt, da Harnstoff im Gegensatz zu reinem Ammoniak in Form einer stabilen und chemisch nicht übermäßig reaktiven wäßrigen Lösung bereitgestellt werden kann. Die Anordnung ist somit für Anwendungen, bei denen Laien gelegentlich einen Vorrat des Reduktionsmittels ergänzen müssen, bestens eignet.

Erfindungsgemäß ist die Verwendung der Anordnung vorgesehen zum Abbau von Stickoxiden in einem Gasstrom, der als Abgas aus einem Verbrennungstriebwerk entlassen wird, wobei der Gasstrom eine zwischen etwa 170 °C und etwa 500 °C schwankende Temperatur hat.

Besonders bevorzugt wird dabei dem Gasstrom vor den Katalysatoren Harnstoff, insbesondere in wäßriger Lösung, zugedüst.

Besonders bevorzugt ist auch die Verwendung einer erfindungsgemäßen Anordnung, wobei die Katalysatoren die Stickoxide nach einem Verfahren der Selektiven Katalytischen Reduktion abbauen.

Ausführungsbeispiele der Erfindung werden nachfolgend anhand der Zeichnung beschrieben. Diese soll die Ausführungsbeispiele nicht maßstäblich darstellen; vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Im einzelnen zeigen:
- FIG 1: ein Ausführungsbeispiel einer Anordnung zum Abbau von Stickoxiden in einem Gasstrom, die einem Verbrennungstriebwerk zugeordnet ist;
- FIG 2: einen Ausschnitt eines anders dimensionierten Ausführungsbeispiels; und
- FIG 3: einen Stapel von Katalysatoren aus einer Anordnung zum Abbau von Stickoxiden aus einem Gasstrom in perspektivischer Ansicht.

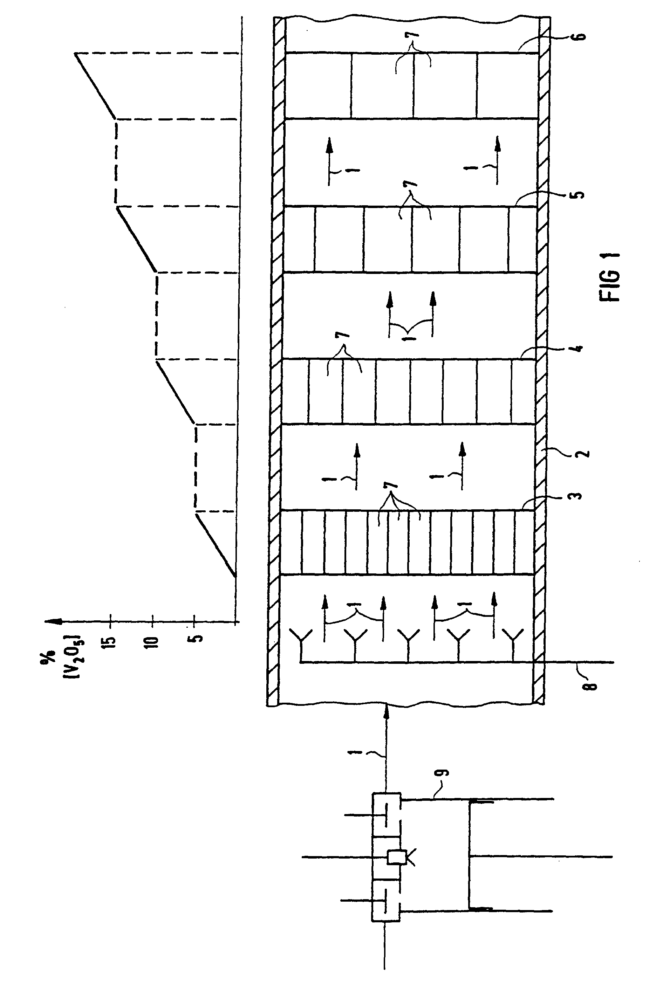

Figur 1 zeigt eine Anordnung zum Abbau von Stickoxiden in einem Gasstrom 1, welcher eine Leitung 2 mit darin beabstandet angeordneten Katalysatoren 3, 4, 5 und 6 nacheinander durchströmt. Jeder dieser Katalysatoren 3, 4, 5 und 6 hat eine Wabenstruktur mit einer Vielzahl von von dem Gasstrom 1 durchströmbaren und zueinander parallelen Zellen 7. Eine solcherart definierte Wabenstruktur wird beschrieben durch einen als "Zelldichte" bezeichneten Parameter, welcher die Anzahl der Zellen 7 pro Flächeneinheit des Querschnitts im jeweiligen Katalysator 3, 4, 5, 6 bezeichnet. Vorliegend ist der vorderste (oder erste) Katalysator 3 der Katalysator mit der höchsten Zelldichte. Die Zelldichte nimmt in den auf den vordersten Katalysator 3 folgenden mittleren (oder zweiten sowie dritten) Katalysatoren 4 und 5 zum hintersten (oder vierten) Katalysator 6 immer weiter ab. Diese Abnahme der Zelldichte entspricht im vorliegenden Fall einer Abnahme um einen Faktor von ungefähr 10, also beispielsweise von 200 cpsi auf 20 cpsi. Die Abnahme zwischen einander benachbarten Katalysatoren 3, 4, 5, 6 oder aber vom vordersten Katalysator 3 zum hintersten Katalysator 6 ist im Einzelfall den jeweiligen Anforderungen anzupassen. Für das Verhältnis zwischen größter und kleinster Zelldichte können Faktoren in Betracht kommen, die zwischen 2 und 40 liegen.

Die Katalysatoren 3, 4, 5 und 6 sind vorzugsweise extrudierte keramische Körper. Sie können jedoch auch Metallträger mit entsprechenden Beschichtungen sein. Extrudierte Körper werden, wenn sie als SCR-Katalysatoren dienen sollen, hergestellt aus einer Knetmasse, deren Grundlage Titandioxid TiO₂ und/oder Wolframtrioxid WO₃ ist. Als katalytisch aktives Medium enthält ein solcher Körper insbesondere Divanadiumpentoxid V₂O₅, welches unmittelbar bei der Herstellung oder nach der Herstellung, dann in Form einer Imprägnierung, in die Knetmasse bzw. in den Körper eingebracht wird. Die Konzentration des aktiven Mediums in dem Körper muß nicht notwendigerweise homogen sein. Im dargestellten Ausführungsbeispiel hat jeder der hier inhomogenen Katalysatoren 3, 4, 5, 6 eine andere mittlere Aktivität, definiert jeweils als Gewichtsanteil des enthaltenen katalytisch aktiven Mediums. Aufgetragen in Figur 1 ist dies in dem Diagramm, welches sich oberhalb der Leitung 2 befindet und welches die Konzentration des Divanadiumpentoxids in jedem der Katalysatoren 3, 4, 5, 6 in Prozent angibt. Diese Konzentration schwankt zwischen 0% an der Anströmseite des vordersten Katalysators 3 und 20% an der Abströmseite des hintersten Katalysators 6. Anströmseite und Abströmseite werden dabei jeweils definiert durch diejenige Richtung, in der der Gasstrom 1 die Katalysatoren 3, 4, 5, 6 durchströmt. In jedem der Katalysatoren 3, 4, 5, 6 steigt die Konzentration des Divanadiumpentoxids von der Anströmseite zur Abströmseite linear an. Die mittleren Aktivitäten, definiert durch die jeweiligen Mittelwerte der Konzentrationen, liegen für den vordersten (ersten) Katalysator 3 bei 2,5%, für den daran anschließenden (zweiten) Katalysator 4 bei 7,5%, für den nächsten (drittten) Katalysator 5 bei 12,5% und für den hintersten (vierten) Katalysator 6 schließlich bei 17,5%. Diese Werte sind in jedem Einzelfall Sache der Auslegung und müssen den Verhältnissen, unter denen die Anordnung jeweils betrieben werden soll, angepaßt werden.

Im Ausführungsbeispiel von Figur 1 arbeiten die Katalysatoren 3, 4, 5 und 6 nach dem Verfahren der Selektiven Katalytischen Reduktion, wobei sie eine Reaktion zwischen den Stickoxiden und einem gesondert zugegebenen Reduktionsmittel katalysieren. Das Reduktionsmittel ist in der Regel Ammoniak, welches direkt zugegeben oder durch Hydrolyse einer Verbindung wie Harnstoff in dem Gasstrom 1 erzeugt wird. Zur Zugabe des Reduktionsmittels ist gemäß Figur 1 eine Eindüsungsanlage 8 vorgesehen. Diese düst dem Gasstrom 1 eine wäßrige Lösung von Harnstoff zu, welcher bei den im Gasstrom 1 herrschenden Temperaturen unter Abspaltung von Ammoniak hydrolysiert wird.

Die gesamte Anordnung ist einem Verbrennungstriebwerk 9, dargestellt beispielhaft als Dieselmotor, zugeordnet. Das Verbrennungstriebwerk 9 stößt als Gasstrom 1 Abgas aus, welches mit Stickoxiden beladen ist. In der Anordnung mit den Katalysatoren 3, 4, 5, 6 werden die Stickoxide durch die Selektive Katalytische Reduktion abgebaut.

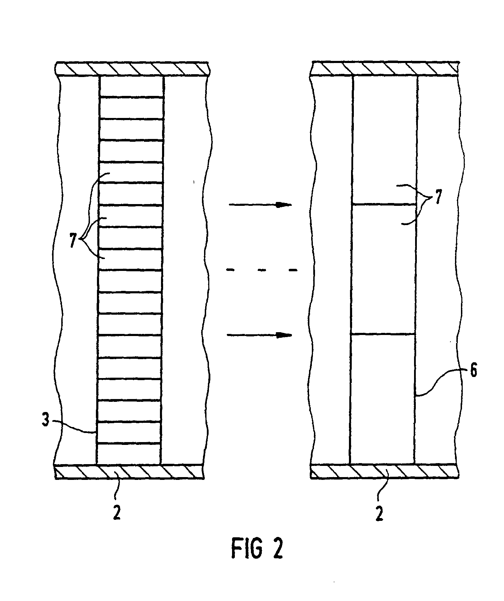

Figur 2 demonstriert die konstruktive Freiheit für die Auslegung des vordersten Katalysators 3 und des hintersten Katalysators 6 in der Leitung 2. Im dargestellten Beispiel ist die Zelldichte des vordersten Katalysators 3 etwa 40 mal so hoch wie die Zelldichte des hintersten Katalysators 6. Es sei nochmals darauf hingewiesen, daß die Zeichnung nicht maßstabsgerecht für ein konkretes Ausführungsbeispiel ist. Nach Figur 2 hat der hinterste Katalysator 6 nur wenige Zellen 7, was der Übersichtlichkeit der Figur zugute kommt, jedoch nicht unbedingt der Realität entspricht. Selbst bei einer Zelldichte um nur 10 cpsi würde ein Katalysator 7 in der Realität zumindest noch etwa 40 Zellen 7 haben.

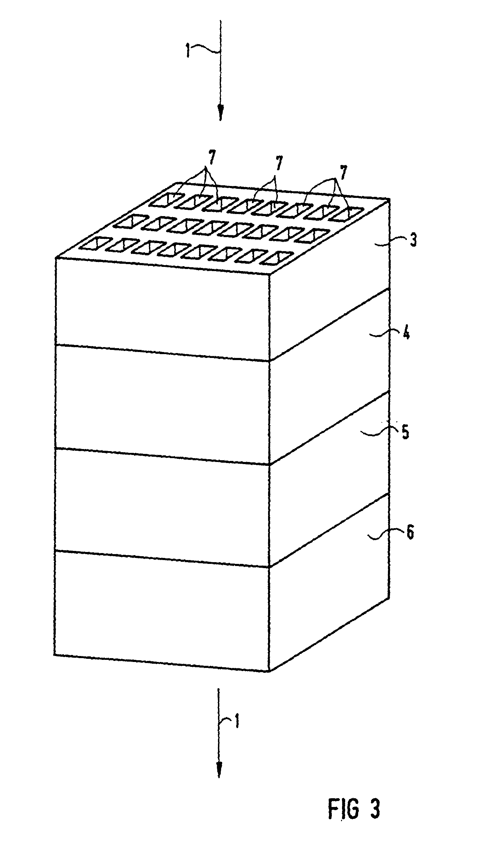

Figur 3 zeigt ein Ausführungsbeispiel für Katalysatoren 3, 4, 5, 6, ausgeführt als keramische Vollextrudate in einem Stapel. Erkennbar ist die Vielzahl der Zellen 7, allerdings nur für den vordersten Katalysator 3. Die folgenden Katalysatoren 4, 5, 6 sind entsprechend ausgestaltet. Figur 3 zeigt auch, daß die Katalysatoren 3, 4, 5 und 6 nicht notwendigerweise voneinander beabstandet sein müssen, sondern einander gegebenenfalls auch berühren können; es ist denkbar, alle Katalysatoren 3, 4, 5 und 6 aus einem einzigen Substrat zu erzeugen.

Die hier geschilderte Anordnung mit mehreren Katalysatoren 3, 4, 5 und 6 zeichnet sich aus durch besondere konstruktive Flexibilität und hohe Wirksamkeit bei kompakter Bauform. Sie ist daher bevorzugt geeignet zum Einsatz in mobilen Katalysatoranlagen, die nach dem SCR-Verfahren arbeiten.

## Patentansprüche

1. Anordnung zum Abbau von Stickoxiden in einem Gasstrom (1), umfassend mehrere nacheinander von dem Gasstrom (1) durchströmbare Katalysatoren (3,4,5,6), deren jeder eine Wabenstruktur mit vielen von dem Gasstrom (1) durchströmbaren und zueinander parallelen Zellen (7) aufweist, wobei jeder Katalysator (3,4,5,6) eine vorgegebene Zelldichte und eine vorgegebene mittlere Aktivität, definiert als Gewichtsanteil des katalytisch aktiven Mediums in dem betreffenden Katalysator (3,4,5,6),besitzt,
**dadurch gekennzeichnet, daß** die Zelldichte eines zweiten Katalysators (4,5,6), der nach einem ersten Katalysator (3,4 bzw. 5) von dem Gasstrom (1) durchströmbar ist, kleiner ist als die Zelldichte des ersten Katalysators (3,4,5), und daß die mittlere Aktivität des zweiten Katalysators (4,5,6) größer ist als die mittlere Aktivität des ersten Katalysators (3,4,5).

2. Anordnung nach Anspruch 1, bei der ein vorderster Katalysator (3), der von dem Gasstrom (1) zuerst durchströmbar ist, eine Zelldichte von 200 cpsi bis 400 cpsi hat, und daß ein hinterster Katalysator (6), der von dem Gasstrom (1) zuletzt durchströmbar ist, eine Zelldichte von 10 cpsi bis 100 cpsi hat.

3. Anordnung nach einem der vorherigen Ansprüche, bei der jeder Katalysator (3,4,5,6) aus einem keramischen Material besteht, dessen Grundlage Titandioxid und/oder Wolframtrioxid ist.

4. Anordnung nach Anspruch 3, bei der das katalytisch aktive Medium Divanadiumpentoxid ist.

5. Anordnung nach Anspruch 4, bei der ein vorderster Katalysator (3), der von dem Gasstrom (1) zuerst durchströmbar ist, eine mittlere Aktivität von 0 % bis 5 % hat, und bei der ein hinterster Katalysator (6), der von dem Gasstrom (1) zuletzt durchströmbar ist, eine mittlere Aktivität von 15 % bis 20 % hat.

6. Anordnung nach einem der vorigen Ansprüche, bei der in jedem Katalysator (3,4,5,6) das katalytisch aktive Medium inhomogen verteilt ist.

7. Anordnung nach einem der vorigen Ansprüche, welcher eine Eindüsungsanlage (8) zur Eindüsung eines Reduktionsmittels, vorzugsweise Harnstoff, in den Gasstrom (1) vor den Katalysatoren (3,4,5,6) zugeordnet ist.

8. Verwendung der Anordnung gemäß einem der vorherigen Ansprüche zum Abbau von Stickoxiden in einem Gasstrom (1), der als Abgas aus einem Verbrennungstriebwerk (9) entlassen wird, wobei der Gasstrom (1) eine zwischen etwa 170 °C und etwa 500 °C schwankende Temperatur hat.

9. Verwendung der Anordnung gemäß einem der Ansprüche 1 bis 7 oder Verwendung nach Anspruch 8, wobei dem Gasstrom (1) vor den Katalysatoren (3,4,5,6) Harnstoff, insbesondere in wäßriger Lösung, zugedüst wird.

10. Verwendung der Anordnung nach einem der Ansprüche 1 bis 7 oder Verwendung nach einem der Ansprüche 8 und 9, wobei die Katalysatoren (3,4,5,6) die Stickoxide nach dem Verfahren der Selektiven Katalytischen Reduktion abbauen.

## Claims

1. Method for load balancing of several autonomously and independently working power supply modules (4, 6, 8) of a modular power supply installation (2), the power supply modules (4, 6, 8) of which are interconnected via a node-type bus topology, the method comprising the following steps:
a) Each power supply module (4, 6, 8) tests the bus (10) such that an arbitration procedure is started if the bus (10) has been free of access for a predetermined time (Tₘ),
b) at the beginning of this arbitration procedure, each power supply module (4, 6, 8) checks whether the bus (10) is in the recessive or in the dominant state,
c) if the bus (10) is in the dominant state, the particular power supply module (4, 6, 8) remains in slave status and terminates the arbitration process,
d) if the bus (10) is in the recessive state, the particular power supply module (4, 6, 8) allocates to itself master status, puts the bus (10) into the dominant state and terminates the arbitration process,
e) the master power supply module (4, 6, 8) generates a load information signal and transmits this signal, and
f) each slave power supply module (4, 6, 8) evaluates this received signal to the effect that the setpoint value of its output voltage is changed such that a detected load unbalance is corrected.

2. Method in accordance with Claim 1, comprising the further procedural steps:
g) Each master power supply module (4, 6, 8) cancels the allocation of the dominant state to the bus (10) after a load-dependent time period (T_{d}),
h) after the cancellation, each master power supply module (4, 6, 8) checks whether the bus (10) changes to the recessive state,
i) if the bus (10) remains in the dominant state, the detecting master power supply module (4, 6, 8) allocates slave status to itself and no longer accesses the bus (10).

3. Method in accordance with Claim 1, wherein the master power supply module surrenders its master status after a predetermined time period (T_{rearb}) and does not access the bus (10) again for a predetermined time period.

4. Method in accordance with Claim 1, wherein at the start of the arbitration procedure each power supply module (4, 6, 8) has a waiting time (tₛₘ, tₛₜₘ, tₘₘ) allocated to it by which the access priorities are determined.

5. Method in accordance with Claim 4, wherein a fault-free slave .power supply module (4, 8) is allocated the highest priority, a slave power supply module (6) which has a fault condition is allocated a medium priority, and a master power supply module (4, 6, 8) is allocated the lowest priority.

6. Method in accordance with Claim 2, wherein the load-dependent time period (T_{d}) is determined from the product of the pulse duty factor (d) and the duration (Tₘ) of the pulse period.

7. Method in accordance with Claim 1, wherein the predetermined time period in which the bus is required to be access-free, is at least inversely proportional to the pulse frequency (fe) of the pulse-width modulated load information signal.

## Revendications

1. Dispositif de décomposition d'oxydes d'azote d'un courant (1) gazeux, comprenant plusieurs pots catalytiques (3, 4, 5, 6), dans lesquels le courant (1) gazeux peut passer successivement, chacun d'entre eux ayant une structure à nid-d'abeilles ayant plusieurs cellules (7) dans lesquelles le courant (1) gazeux peut passer et qui sont parallèles entre elles, chaque pot catalytique (3, 4, 5, 6) ayant une densité de cellule prescrite et une activité moyenne prescrite définie comme étant la proportion en poids du milieu catalytiquement actif dans le pot catalytique (3, 4, 5, 6) concerné,
**caractérisé en ce que** la densité de cellule d'un deuxième pot catalytique (4, 5, 6) dans lequel le courant (1) gazeux peut passer après avoir passé dans un premier pot catalytique (3, 4, 5) est plus petite que la densité de cellule du premier pot catalytique (3, 4, 5) et en ce que l'activité moyenne du deuxième pot catalytique (4, 5, 6) est plus grande que l'activité moyenne du premier pot catalytique (3, 4, 5).

2. Dispositif suivant la revendication 1, dans lequel un pot catalytique (3) le plus en avant, dans lequel le courant (1) gazeux peut passer d'abord, a une densité de cellule de 200 cellules par pouce² à 400 cellules par pouce² et en ce qu'un pot catalytique (6) le plus en arrière, dans lequel le courant (1) gazeux est passé en dernier, a une densité de cellule de 10 cellules par pouce² à 100 cellules par pouce².

3. Dispositif suivant l'une des revendications précédentes, dans lequel chaque pot catalytique (3, 4, 5, 6) est en un matériau céramique dont la base est en dioxyde de titane et/ou en trioxyde de tungstène.

4. Dispositif suivant la revendication 3, dans lequel le milieu catalytiquement actif est le pentoxyde de divanadium.

5. Dispositif suivant la revendication 4, dans lequel un pot catalytique (3) le plus en avant, dans lequel le courant (1) gazeux peut passer d'abord, a une activité moyenne de 0 % à 5 % et dans lequel le catalyseur (6) le plus en arrière, dans lequel le courant (1) gazeux peut passer en dernier, a une activité moyenne de 15 % à 20 %.

6. Dispositif suivant l'une des revendications précédentes, dans lequel dans chaque pot catalytique (3, 4, 5, 6), le milieu actif catalytiquement est réparti d'une manière qui n'est pas homogène.

7. Dispositif suivant l'une des revendications précédentes, auquel est associée une installation (8) d'injection destinée à injecter un agent réducteur, de préférence de l'urée, dans le courant (1) gazeux en amont des pots catalytiques (3, 4, 5, 6).

8. Utilisation du dispositif suivant l'une des revendications précédentes pour décomposer des oxydes d'azote d'un courant (1) gazeux qui quitte, sous forme de gaz d'échappement, un moteur (9) à combustion interne, le courant (1) gazeux ayant une température fluctuant entre environ 170°C et environ 500°C.

9. Utilisation du dispositif suivant l'une des revendications 1 à 7, ou utilisation suivant la revendication 8, dans laquelle le courant (1) gazeux reçoit en amont des pots catalytiques (3, 4, 5, 6) de l'urée, notamment en solution aqueuse.

10. Utilisation du dispositif suivant l'une des revendications 1 à 7, ou utilisation suivant l'une des revendications 8 et 9, dans lequel les pots catalytiques (3, 4, 5, 6) décomposent les oxydes d'azote par le procédé de réduction catalytique sélective.
